# EUROPÄISCHE PATENTSCHRIFT

(11) **EP 3 276 310 B1**
(45) Veröffentlichungstag und Bekanntmachung des Hinweises auf die Patenterteilung: **19.09.2018**
(21) Anmeldenummer: 16181430.6
(22) Anmeldetag: 27.07.2016
(51) Int. Cl.: G01D 5/347

(54) **LÄNGENMESSEINRICHTUNG**
LENGTH MEASURING DEVICE
DISPOSITIF DE MESURE DE LONGUEUR

(43) Veröffentlichungstag der Anmeldung: 31.01.2018
(73) Patentinhaber: Dr. Johannes Heidenhain GmbH, 83301 Traunreut (DE)
(72) Erfinder: MEYER, Hermann, 83458 Schneizlreuth (DE)

(56) Entgegenhaltungen:
- EP-A1- 0 388 453
- EP-A1- 1 731 878
- EP-A2- 1 111 346
- DE-A1- 4 320 728
- US-A- 4 541 181

## Beschreibung

### GEBIET DER TECHNIK

Die vorliegende Erfindung betrifft eine Längenmesseinrichtung zur Messung der Relativlage zweier Objekte mit einem Maßband mit einer Messteilung und einer in Längsrichtung dazu verschiebbaren Abtasteinheit zur Abtastung der Messteilung sowie einer Spannvorrichtung zum Spannen des Maßbandes entlang eines Trägers.

### STAND DER TECHNIK

Die EP 2 325 610 B1 offenbart eine gattungsbildende Längenmesseinrichtung mit einem Maßband, das in Längsrichtung (entspricht der Messrichtung) gespannt gehalten wird. Zum Spannen des Maßbandes ist an einem der beiden Maßbandenden eine Spannvorrichtung vorgesehen. Die Spannvorrichtung umfasst eine Feder, deren Spannkraft mittels einer Schraube einstellbar ist. Die Spannvorrichtung ist gegenüber dem Maßband versenkt angeordnet, so dass die Abtasteinheit endseitig über die Spannvorrichtung hinweg herausgeführt werden kann. Diese versenkte Anordnung der Spannvorrichtung bedingt, dass die Spannkraft mit dem Maßband nicht mehr fluchtend angeordnet werden kann. Dadurch übt die Spannvorrichtung Querkräfte auf das Maßband aus, welche die Messgenauigkeit nachteilig beeinflussen.

Die EP 1 111 346 A2 offenbart eine Längenmesseinrichtung, bei der eine Spannvorrichtung zum Spannen des Maßbandes auf den Träger aufsetzbar und an einem der Endblöcke ansetzbar und nach erfolgter Maßbandspannung wieder entfernbar ist. Die Spannvorrichtung umfasst eine vorgespannte Feder, mit der die Spannkraft aufgebracht werden kann. Die auf den Träger aufsetzbare Anordnung der Spannvorrichtung bedingt, dass die Feder über dem Maßband angeordnet ist. Dadurch übt die Spannvorrichtung Querkräfte auf das Maßband aus, welche die Messgenauigkeit nachteilig beeinflussen.

### ZUSAMMENFASSUNG DER ERFINDUNG

Der vorliegenden Erfindung liegt die Aufgabe zugrunde, eine Längenmesseinrichtung anzugeben, die wartungsfreundlich aufgebaut ist und mit der eine präzise Positionsmessung ermöglicht wird.

Diese Aufgabe wird erfindungsgemäß durch die Längenmesseinrichtung mit den Merkmalen des Anspruchs 1 gelöst.

Durch die Erfindung wird die Möglichkeit geschaffen, dass das Halteteil mit dem daran befestigten Maßband an einem Montageblock ortsfest befestigbar ist und der Rest der Spannvorrichtung danach entfernt werden kann. Dabei bleibt der eingestellte Spannungszustand des Maßbandes erhalten und die Abtasteinheit kann über das Maßband und das Halteteil hinweg in Längsrichtung herausgefahren werden. Hierzu ist es nicht erforderlich die gesamte Spannvorrichtung derart versenkt anzuordnen, dass die Abtasteinheit endseitig darüber hinweg herausgefahren werden kann, sondern es reicht aus, wenn das Halteteil derart ausgebildet ist, dass dieses nicht im Verfahrweg der Abtasteinheit angeordnet ist.

Vorzugsweise ist der Montageblock in Längsrichtung verschiebbar am Träger angeordnet, also vom Träger entkoppelt.

Die Erfindung ermöglicht es nun auch das zur Spannung des Maßbandes vorgesehene Federmittel derart anzuordnen, dass seine Wirkungslinie zu dem Maßband fluchtend verläuft.

Von Vorteil ist es, wenn die Spannvorrichtung ein Zwischenelement aufweist, das mittels des Einstellmittels relativ zum Fixteil in Längsrichtung verstellbar ist, und wobei das Federmittel eine in Längsrichtung wirkende Federkraft vom Zwischenelement ausgehend auf das Spannelement ausübt.

Als Einstellmittel eignet sich insbesondere eine Schraube, die derart ausgebildet und angeordnet ist, dass durch Drehen der Schraube das Zwischenelement relativ zum Fixteil in Längsrichtung verlagerbar ist.

Insbesondere ist das Halteteil mittels eines Befestigungsmittels in Form einer Schraube lösbar am Spannelement befestigt, die derart ausgebildet und angeordnet ist, dass durch Drehen der Schraube das Halteteil relativ zum Spannelement in Längsrichtung verlagerbar ist.

Die das Einstellmittel bildende Schraube und die das Befestigungsmittel bildende Schraube verlaufen vorzugsweise in Längsrichtung und sind senkrecht zur Längsrichtung zueinander versetzt angeordnet.

Das Federmittel, welches das Maßband gespannt hält, ist vorzugsweise eine in Längsrichtung verlaufend angeordnete Schraubenfeder in Form einer Zugfeder oder einer Druckfeder. Das Federmittel kann auch aus einer Anordnung aus mehreren Zugfedern oder mehreren Druckfedern bestehen.

Die Längenmesseinrichtung weist einen Montageblock auf, der in Längsrichtung vom Träger entkoppelt ist. Dabei ist das Halteteil mit dem daran befestigten und unter der eingestellten Spannung gehaltenen Maßband an diesem Montageblock ortsfest befestigbar. Über den Montageblock ist somit das gespannte Maßband unmittelbar am zu messenden Objekt ortsfest befestigbar.

Die ortsfeste Befestigung des Halteteils am Montageblock erfolgt vorzugsweise durch Klemmen.

Die Vorteile der Erfindung kommen besonders zum Tragen, wenn der Träger ein Hohlprofil ist, in dessen Innenraum das Maßband längs des Hohlprofils gespannt angeordnet ist.

Vorteilhafte Ausführungen der Erfindung ergeben sich aus den Maßnahmen, die in den abhängigen Ansprüchen aufgeführt sind.

Weitere Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: eine perspektivische Ansicht einer erfindungsgemäß ausgebildeten Längenmesseinrichtung;
- Figur 2: einen Längsschnitt der Längenmesseinrichtung gemäß Figur 1 mit einer ersten erfindungsgemäß ausgebildeten Spannvorrichtung;
- Figur 3: eine perspektivische Ansicht der Spannvorrichtung der Längenmesseinrichtung gemäß Figur 2 in einer ersten Montagestellung;
- Figur 4: eine perspektivische Ansicht der Spannvorrichtung in einer zweiten Montagestellung;
- Figur 5: eine Explosionsdarstellung der Spannvorrichtung;
- Figur 6: eine perspektivische Darstellung des Montageblocks;
- Figur 7: den Montageblock gemäß Figur 7 im Schnitt, und
- Figur 8: eine zweite Spannvorrichtung gemäß der Erfindung.

### BESCHREIBUNG DER AUSFÜHRUNGSFORMEN

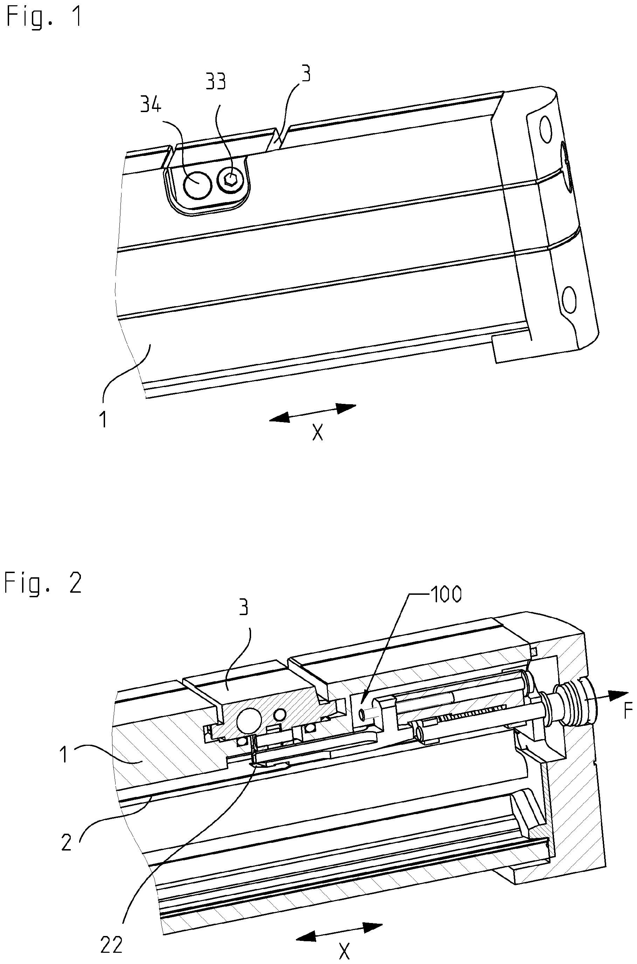

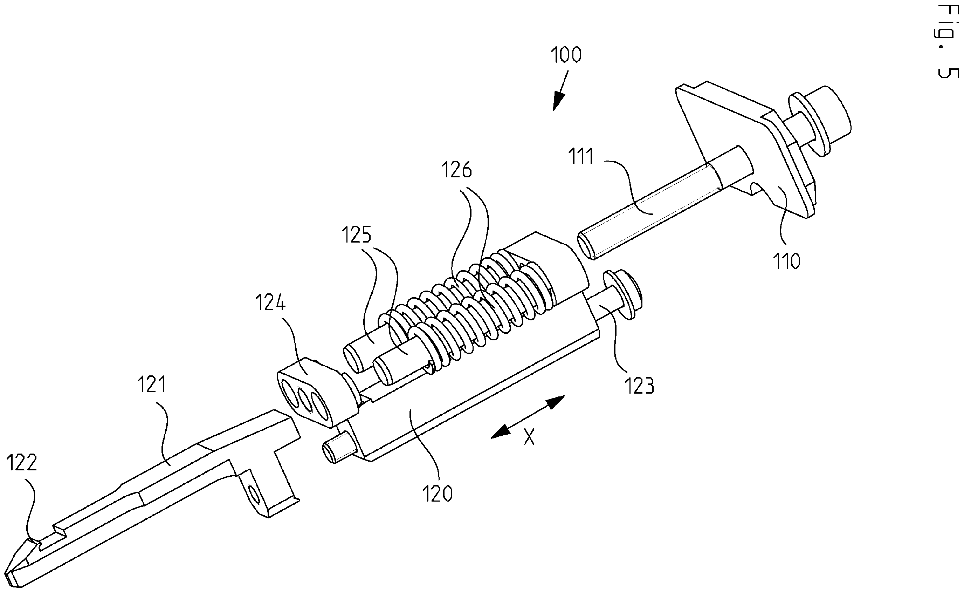

Ein erstes Ausführungsbeispiel der Erfindung wird anhand der Figuren 1 bis 7 näher erläutert.

Diese Längenmesseinrichtung besteht aus einem Träger 1 in Form eines Hohlprofils, das einen durch dachförmig angeordnete Dichtlippen abgedichteten Längsschlitz aufweist. Bei der Positionsmessung ist im Inneren des Hohlprofils eine Abtasteinheit angeordnet, die über einen durch die Dichtlippen und den Längsschlitz hindurchgeführten Mitnehmer mit einem zu messenden Objekt befestigt ist. Zur Positionsmessung wird der Mitnehmer der Abtasteinheit an ein erstes zu messende Objekt angebaut und der Träger 1 an ein in Längsrichtung X dazu bewegliches zweites zu messende Objekt angebaut. Die Längsrichtung X entspricht der Messrichtung. Aus Gründen der Übersichtlichkeit sind in den Figuren die Dichtlippen und die Abtasteinheit der Längenmesseinrichtung nicht dargestellt.

Bei Längenmesseinrichtungen werden Maßbänder 2 verwendet, deren Messteilung, um thermischen Ausdehnungen entgegenzuwirken, bewusst verkürzt hergestellt wird. Zum Messbetrieb werden die Maßbänder 2 mittels Federkraft in Längsrichtung X auf Sollmaß gedehnt. Im Träger 1 ist eine Nut vorgesehen, in welcher das Maßband 2 in Richtungen quer zur Längsrichtung X formschlüssig aufgenommen ist, aber in Längsrichtung X vom Träger 1 derart entkoppelt ist, dass es sich unabhängig vom Träger 1 ausdehnen kann. Das Maßband 2 trägt auf seiner Oberseite, also zur Abtasteinheit weisend und dieser gegenüberliegend, die Messteilung. Diese Messteilung wird im Messbetrieb von der Abtasteinheit abgetastet, vorzugsweise lichtelektrisch, dabei werden von der Abtasteinheit positionsabhängige Abtastsignale generiert.

Das Maßband 2 wird entlang des Trägers 1 gespannt gehalten, indem es an einem Ende am Träger 1 oder vorzugsweise unmittelbar am zu messenden Objekt ortsfest fixiert ist und am anderen Ende mittels einer Spannvorrichtung 100 gespannt ist und im Messbetrieb in diesem gespannten Zustand mittels eines Montageblocks 3 unmittelbar am zu messenden Objekt ortsfest fixiert ist. Die Erfindung betrifft die Ausgestaltung der Spannvorrichtung 100, die im Ausführungsbeispiel am rechtsseitigen Ende des Trägers 1 angeordnet ist, das linksseitige Ende ist daher in den Figuren nicht dargestellt.

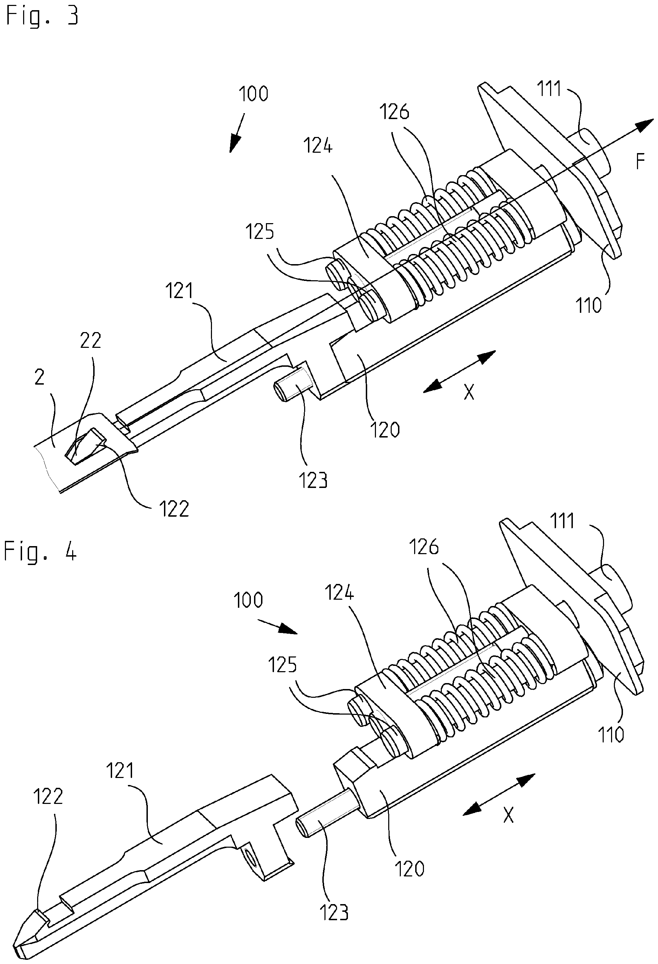

Die nach dem ersten Beispiel ausgebildete Spannvorrichtung 100 ist in den Figuren 3 bis 5 im Detail dargestellt und wird nachfolgend näher erläutert. Die Spannvorrichtung 100 zum Spannen des Maßbandes 2 umfasst ein Fixteil 110 und ein daran unter Spannung gehaltenes Spannelement 120 mit einem Haltebereich, an dem das Maßband 2 befestigt ist. Der Haltebereich ist erfindungsgemäß ein vom Spannelement 120 trennbares Halteteil 121, wobei das Spannelement 120 und das Halteteil 121 voneinander trennbar sind. Im dargestellten Ausführungsbeispiel ist das Maßband 2 am Halteteil 121 durch Formschluss befestigt, indem ein hakenförmiger Mitnehmer 122 in eine Ausnehmung 22 des Maßbandes 2 eingreift.

Das Spannelement 120 ist am Fixteil 110 mittels eines Einstellmittels 111 zur Einstellung der Spannung des Maßbandes 2 befestigt. Das Halteteil 121 ist durch ein Befestigungsmittel 123 am Spannelement 120 lösbar befestigt, das unabhängig von dem Einstellmittel 111 betätigbar ist. Das Befestigungsmittel 123 ist im Ausführungsbeispiel eine Schraube die sich am Spannelement 120 abstützt und mit der das Halteteil 121 mit dem Spannelement 120 verschraubbar ist.

Die Spannvorrichtung 100 weist ein mittels des Einstellmittels 111 relativ zum Spannelement 120 in Längsrichtung X verschiebbares Zwischenelement 124 auf. Zwischen dem Spannelement 120 und dem Zwischenelement 124 ist ein Federmittel 126 angeordnet, im Beispiel bestehend aus zwei Druckfedern. Das Zwischenelement 124 kann mittels des Einstellmittels 111 relativ zum Spannelement 120 in Längsrichtung X verschoben werden, wodurch die Federkraft, mit der das Spannelement 120 am Fixteil 110 angeordnet ist, veränderbar ist und somit die auf das Maßband 2 wirkende Spannung F veränderbar ist. Das Zwischenelement 124 ist über eine Führung 125 am Spannelement 120 definiert längsgeführt. Im Beispiel wird diese Führung 125 von zwei Führungsstiften gebildet.

Das Einstellmittel 111 ist eine Schraube, die sich am Fixteil 110 in Längsrichtung X abstützt und durch Drehen das Zwischenelement 124 relativ zum Fixteil 110 in Längsrichtung X verschiebt.

Vorzugsweise ist das Federmittel 126 räumlich derart angeordnet, dass die Wirkungslinie der durch sie erzeugte Spannung F in der Ebene des Maßbandes 2, insbesondere fluchtend zu dem in Längsrichtung X gespannten Maßband 2 verläuft.

Das Fixteil 110 ist am Träger 1 in Längsrichtung X festgelegt, beispielsweise durch Formschluss. Das Fixteil 110 stützt sich im Ausführungsbeispiel an einer quer zu Längsrichtung X verlaufenden Fläche des Trägers 1 ab und wirkt der Spannkraft F entgegen.

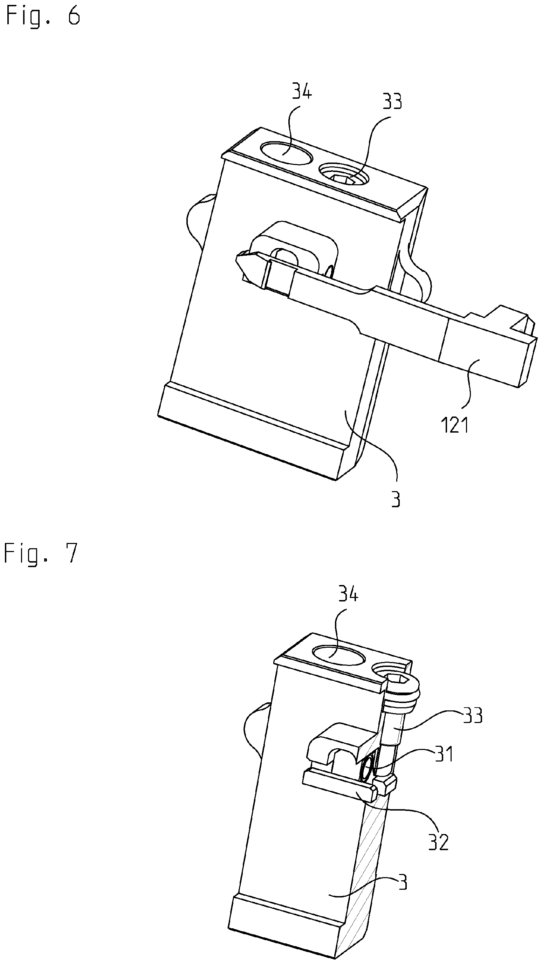

Das Halteteil 121 ist an dem Montageblock 3 in Längsrichtung X festlegbar. Im Ausführungsbeispiel erfolgt das Fixieren des Halteteils 121 am Montageblock 3 durch Klemmen. Der Montageblock 3 mit dem Klemmmechanismus ist in den Figuren 6 und 7 dargestellt. Der Klemmmechanismus besteht aus einem um eine Achse 31 schwenkbaren Hebel 32. Das Verschwenken des Hebels 32 und somit das Klemmen des Halteteils 121 am Montageblock 3 wird durch eine Klemmschraube 33 eingeleitet.

Der Montageblock 3 ist am Träger 1 in Längsrichtung X verschiebbar angeordnet, also vom Träger 1 in Längsrichtung X entkoppelt. Vor dem eigentlichen Messbetrieb wird mit der Spannvorrichtung 100 die gewünschte Spannung des Maßbandes 2 durch Betätigen des Einstellmittels 111 hergestellt. Während dieser Einstellung ist das Halteteil 121 nicht am Montageblock 3 fixiert. Nach erfolgter Einstellung der gewünschten Spannung wird der Träger 1 und der Montageblock 3 an eines der zu messenden Objekte angebaut. Am Montageblock 3 ist hierzu eine quer zur Längsrichtung X verlaufende Bohrung 34 vorgesehen, mit der der Montageblock 3 über eine Schraube am zu messenden Objekt ortsfest fixiert werden kann. Nach erfolgtem Anbau wird das Ende des Maßbandes 2 über das Halteteil 121 am Montageblock 3 und somit unter Umgehung des Trägers 1 am zu messenden Objekt fixiert. Hierzu wird das Halteteil 121 am Montageblock 3 ortsfest befestigt, im Beispiel durch Klemmen.

Ein platzsparender Aufbau der Längenmesseinrichtung bedingt, dass zumindest ein Teil der Spannvorrichtung 100 im Verfahrweg der Abtasteinheit angeordnet ist und im eingebauten Zustand das endseitige Herausfahren der Abtasteinheit behindert. Die erfindungsgemäß ausgebildete Spannvorrichtung 100 ermöglicht es nun, die Spannvorrichtung 100 vom Halteteil 121 zu trennen. Während dieses Vorgangs ist der Montageblock 3 am zu messenden Objekt befestigt und das Halteteil 121 und somit das Maßband 2 am Montageblock 3 befestigt. Beim Trennvorgang wird mittels des Befestigungsmittels 123 das Spannelement 120 vom Halteteil 121 entfernt. Dabei entspannt sich das Federmittel 126, bis sich dieses an dem Fixteil 110 anlegt. Die Spannvorrichtung 100 kann nun ohne dem Halteteil 121 endseitig entnommen werden und aus dem Verfahrweg der Abtasteinheit entfernt werden, so dass die Abtasteinheit endseitig über das Halteteil 121 hinweg herausgefahren werden kann. Die so entnommene Abtasteinheit kann durch eine neue ersetzt werden. Nach dem Wiedereinfahren dieser neuen Abtasteinheit in den hohlförmigen Träger 1 wird die Spannvorrichtung 100 wieder eingesetzt, indem das Fixteil 110 mit dem Träger 1 verbunden wird und das Spannelement 120 mit dem Halteteil 121. Während des Einschraubens des Befestigungsmittels 123 in das Halteteil 121 spannt sich das Federmittel 126 wieder in der vor der Entnahme eingestellten Weise, so dass auf das Maßband 2 die vorher eingestellte Spannung ausgeübt wird. Wie bereits oben ausgeführt, betrifft die Erfindung die rechtsseitige Ausgestaltung der dargestellten Längenmesseinrichtung, weshalb das linke Ende nicht dargestellt wurde. In vorteilhafter Weise ist das Maßband 2 am der Spannvorrichtung 100 gegenüberliegenden Ende (hier linkes Ende) über einen Montageblock unmittelbar an dem zu messenden Objekt fixiert. Indem das Maßband 2 mittels des Halteteils 121 in Längsrichtung X starr am Montageblock 3 und dieser wiederum in Längsrichtung X ortsfest am zu messenden Objekt befestigt wird, ist das gesamte Maßband 2 unmittelbar am zu messenden Objekt gespannt gehalten. Aufgrund von Temperaturänderungen hervorgerufene Längenänderungen des zu messenden Objektes - in der Regel ein Maschinenteil einer Werkzeugmaschine - werden direkt auf das Maßband 2 übertragen. Durch die Entkopplung des linksseitigen Montageblocks und des rechtsseitigen Montageblocks 3 vom Träger 1 werden auch keine Zwangskräfte vom Träger 1 - der in der Regel aus Aluminium besteht - auf das Maßband 2 übertragen.

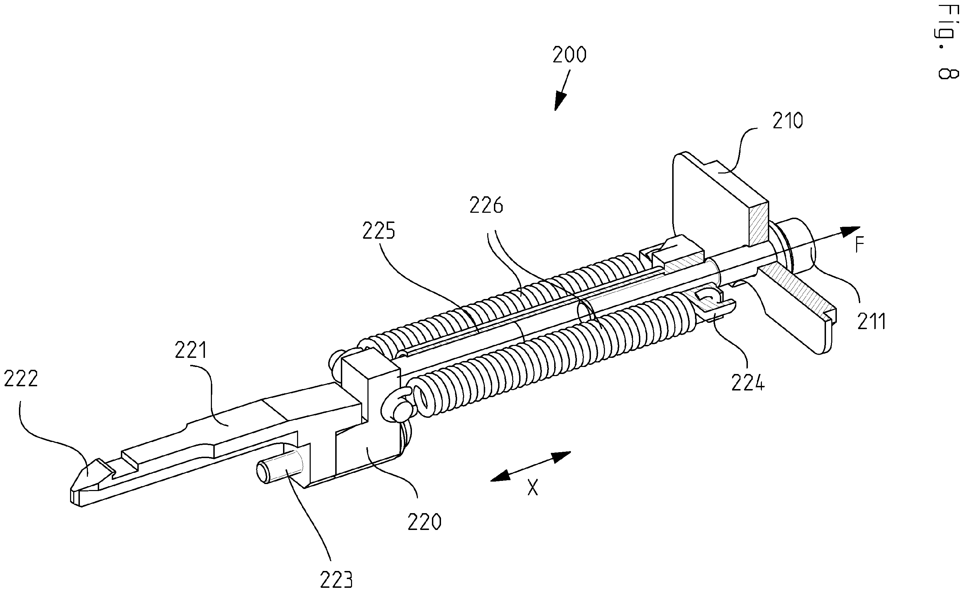

Eine alternative Ausgestaltung einer Spannvorrichtung 200 wird nachfolgend anhand der Figur 8 näher erläutert. Diese Spannvorrichtung 200 kooperiert mit dem Maßband 2, dem Träger 1 und dem Montageblock 3 in gleicherweise wie die Spannvorrichtung 100. Aus Gründen der Übersichtlichkeit sind die Elemente Träger 1, Maßband 2 und Montageblock 3 in der Figur 8 nicht dargestellt.

Auch diese Spannvorrichtung 200 zum Spannen des Maßbandes 2 umfasst ein Fixteil 210 und ein daran mittels eines in Längsrichtung X wirkenden Federmittels 226 gehaltenes Spannelement 220. An dem Spannelement 220 ist ein Halteteil 221 lösbar befestigt. Dieses Halteteil 221 kann entsprechend dem ersten Ausführungsbeispiel ausgeführt sein. Das Maßband 2 wird am Halteteil 221 von einem daran ausgebildeten hakenförmigen Mitnehmer 222 aufgenommen. Mittels eines Einstellmittels 211 ist die Spannung des Federmittels 226 einstellbar. Das Spannelement 220 ist mittels eines Befestigungsmittels 223 vom Halteteil 221 lösbar, wobei das Befestigungsmittel 223 unabhängig von dem Einstellmittel 211 betätigbar ist. Die Spannvorrichtung 200 weist weiterhin ein Zwischenelement 224 auf, das mittels des Einstellmittels 211 relativ zum Fixteil 210 in Längsrichtung X verstellbar ist. Das Federmittel 226 wird in diesem Ausführungsbeispiel von zwei Zugfedern gebildet, die eine in Längsrichtung X wirkende Federkraft vom Zwischenelement 224 ausgehend auf das Spannelement 220 ausüben. Zur definierten Längsführung des Zwischenelementes 224 relativ zum Spannelement 220 ist auch hier eine Führung 225 vorgesehen.

Den beiden Ausführungsbeispielen ist gemeinsam, dass der Haltebereich, an dem das Maßband 2 gehaltert ist, als ein vom Spannelement 120, 220 trennbares Halteteil 121, 221 ausgebildet ist. Die Trennstelle ist dabei derart ausgebildet, dass nach dem Trennen wieder ein reproduzierbares Verbinden möglich ist. In den Beispielen bildet das Spannelement 120, 220 und das Halteteil 121, 221 hierfür jeweils eine Anschlagfläche für einen definierten Formschluss, der in Längsrichtung X wirkt.

Die vor dem Trennen eingestellte Position des Zwischenelementes 124, 224 relativ zum Fixteil 110, 210 bleibt beim Trennen erhalten, so dass sich die damit eingestellte und auf das Maßband 2 wirkende Federkraft nach dem Wiederverbinden von Halteteil 121, 221 und Spannelement 120, 220 wieder einstellt. Gemäß der Erfindung ist beim Wiederverbinden die vor dem Trennen eingestellte Spannung F des Maßbandes 2 automatisch wieder hergestellt.

Bei beiden Ausführungsbeispielen muss nur das Halteteil 121, 221 derart ausgeführt sein, dass es außerhalb des Verfahrweges der Abtasteinheit angeordnet ist. Die restlichen Teile der Spannvorrichtung 100, 200 können ohne dem Halteteil 121, 221 endseitig entnommen werden und aus dem Verfahrweg der Abtasteinheit entfernt werden, so dass die Abtasteinheit endseitig über das Halteteil 121, 221 hinweg herausgefahren werden kann.

Bei beiden Ausführungsbeispielen ist es nun einfach möglich, die Spannvorrichtung 100, 200 derart auszugestalten und anzuordnen, dass die Wirkungslinie des Federmittels 126, 226 in der Ebene des Maßbandes 2 liegt, insbesondere mit dem Maßband fluchtet.

Bei allen Ausführungsbeispielen ist es besonders vorteilhaft, wenn das Maßband 2 und der Montageblock 3 aus identischem Material bestehen, insbesondere aus dem gleichen Material, aus dem das Maschinenteil besteht, an das der Montageblock 3 angebaut wird. In den meisten Fällen besteht das Maschinenteil aus Stahl, dann sollte auch der Montageblock 3 aus Stahl bestehen und das Maßband 2 ein Stahlband sein.

Wie bereits ausgeführt unterscheidet sich das zweite Ausführungsbeispiel vom ersten Ausführungsbeispiel durch die Federmittel 126, 226. Bei vergleichbar aufzubringenden Federspannungen F und Federkonstanten ist mit der Spannvorrichtung 100 in Längsrichtung X ein kürzerer Aufbau möglich als mit der Spannvorrichtung 200.

Die Erfindung ist auch bei Längenmesseinrichtungen vorteilhaft einsetzbar, bei denen der Träger 1 aus mehreren aneinander gestoßenen Teilstücken besteht. In diesem Fall ist das Maßband 2 über diese mehreren Teilstücke hinweg gespannt.

Die Erfindung ist nicht nur bei oben beschriebenen sogenannten gekapselten Längenmesseinrichtungen vorteilhaft einsetzbar, sondern auch bei offenen Messvorrichtungen. Der Träger mit dem Maßband einer offenen Messvorrichtung wird oft derart an zu messende Objekte angebaut, dass die Abtasteinheit für Wartungszwecke nur endseitig durch Herausfahren zu entnehmen ist.

## Patentansprüche

1. Längenmesseinrichtung zur Messung der Relativlage zweier Objekte mit
- einem Maßband (2) mit einer Messteilung und einem Träger (1) und einer in Längsrichtung (X) dazu verschiebbaren Abtasteinheit zur Abtastung der Messteilung;
- einer Spannvorrichtung (100, 200) zum Spannen des Maßbandes (2) entlang des Trägers (1), umfassend
• ein gegenüber dem Träger (1) ortsfestes Fixteil (110, 210) und ein daran mittels eines in Längsrichtung (X) wirkenden Federmittels (126, 226) gespannt gehaltenes Spannelement (120, 220), das einen Haltebereich aufweist, an dem das Maßband (2) befestigt ist;
• ein Einstellmittel (111, 211) zur Einstellung der Spannung (F) des Maßbandes (2),
wobei
der Haltebereich ein vom Spannelement (120, 220) trennbares Halteteil (121, 221) ist, das lösbar am Spannelement (120, 220) befestigt ist und das derart ausgebildet ist, dass es nicht im Verfahrweg der Abtasteinheit angeordnet ist und wobei
das Federmittel (126, 226) derart angeordnet ist, dass seine Wirkungslinie zu dem Maßband (2) fluchtend verläuft.

2. Längenmesseinrichtung nach Anspruch 1, wobei die Spannvorrichtung (100, 200) ein Zwischenelement (124, 224) aufweist, das mittels des Einstellmittels (111, 211) relativ zum Fixteil (110, 210) in Längsrichtung (X) verstellbar ist, und wobei das Federmittel (126, 226) eine in Längsrichtung (X) wirkende Federkraft vom Zwischenelement (124, 224) ausgehend auf das Spannelement (120, 220) ausübt.

3. Längenmesseinrichtung nach Anspruch 2, wobei das Einstellmittel (111, 211) eine Schraube ist, die derart ausgebildet und angeordnet ist, dass durch Drehen der Schraube (111, 211) das Zwischenelement (124, 224) relativ zum Fixteil (110, 210) in Längsrichtung (X) verlagerbar ist.

4. Längenmesseinrichtung nach einem der vorhergehenden Ansprüche, wobei das Halteteil (121, 221) mittels eines Befestigungsmittels (123, 223) in Form einer Schraube lösbar am Spannelement (120, 220) befestigt ist, die derart ausgebildet und angeordnet ist, dass durch Drehen der Schraube (123, 223) das Halteteil (121, 221) relativ zum Spannelement (120, 220) in Längsrichtung (X) verlagerbar ist.

5. Längenmesseinrichtung nach Anspruch 3 und 4, wobei die das Einstellmittel (111, 211) bildende Schraube und die das Befestigungsmittel (123, 223) bildende Schraube in Längsrichtung (X) verlaufend und senkrecht zur Längsrichtung (X) gegeneinander versetzt angeordnet sind.

6. Längenmesseinrichtung nach einem der vorhergehenden Ansprüche, wobei das Federmittel (126, 226) zumindest eine in Längsrichtung (X) verlaufend angeordnete Schraubenfeder in Form einer Zugfeder oder einer Druckfeder ist.

7. Längenmesseinrichtung nach einem der vorhergehenden Ansprüche, wobei ein Montageblock (3) in Längsrichtung (X) verschiebbar am Träger (1) angeordnet ist und das Halteteil (121, 221) mit dem daran befestigten Maßband (2) an diesem Montageblock (3) ortsfest befestigbar ist.

8. Längenmesseinrichtung nach Anspruch 7, wobei das Halteteil (121, 221) am Montageblock (3) durch Klemmen festlegbar ist.

9. Längenmesseinrichtung nach einem der vorhergehenden Ansprüche, wobei der Träger (1) ein Hohlprofil ist, in dessen Innenraum das Maßband (2) längs des Hohlprofils gespannt ist.

## Claims

1. Length measuring device for measuring the relative position of two objects, having
- a measuring tape (2) having a measuring graduation and a carrier (1) and a scanning unit that can be displaced relative thereto in the longitudinal direction (X) for scanning the measuring graduation;
- a tensioning device (100, 200) for tensioning the measuring tape (2) along the carrier (1), comprising
• a fixed part (110, 210) fixed in position with respect to the carrier (1) and a tensioning element (120, 220) which is kept tensioned thereon by a spring means (126, 226) acting in the longitudinal direction (X) and which has a holding region to which the measuring tape (2) is fixed;
• an adjusting means (111, 211) for adjusting the tension (F) of the measuring tape (2),
wherein
the holding region is a holding part (121, 221) which can be separated from the tensioning element (120, 220), is detachably fixed to the tensioning element (120, 220) and which is designed in such a way that it is not arranged in the travel path of the scanning unit, and wherein
the spring means (126, 226) is arranged in such a way that its line of action extends flush with the measuring tape (2).

2. Length measuring device according to Claim 1, wherein the tensioning device (100, 200) has an intermediate element (124, 224) which can be adjusted in the longitudinal direction (X) relative to the fixed part (110, 210) by the adjusting means (111, 211), and wherein the spring means (126, 226) exerts a spring force on the tensioning element (120, 220), originating from the intermediate element (124, 224) and acting in the longitudinal direction (X).

3. Length measuring device according to Claim 2, wherein the adjusting means (111, 211) is a screw, which is formed and arranged in such a way that, by rotating the screw (111, 211), the intermediate element (124, 224) can be displaced in the longitudinal direction (X) relative to the fixed part (110, 210).

4. Length measuring device according to one of the preceding claims, wherein the holding part (121, 221) is detachably fixed to the tensioning element (120, 220) by a fixing means (123, 223) in the form of a screw, which is formed and arranged in such a way that, by rotating the screw (123, 223), the holding part (121, 221) can be displaced in the longitudinal direction (X) relative to the tensioning element (120, 220).

5. Length measuring device according to Claim 3 and 4, wherein the screw forming the adjusting means (111, 211) and the screw forming the fixing means (123, 223) are arranged so as to extend in the longitudinal direction (X) and to be offset with respect to each other perpendicular to the longitudinal direction (X).

6. Length measuring device according to one of the preceding claims, wherein the spring means (126, 226) is at least one helical spring in the form of a tension spring or compression spring arranged to extend in the longitudinal direction (X).

7. Length measuring device according to one of the preceding claims, wherein a mounting block (3) is arranged on the carrier (1) such that it can be displaced in the longitudinal direction (X), and the holding part (121, 221) with the measuring tape (2) fixed thereto can be fixed to this mounting block (3) in a fixed position.

8. Length measuring device according to Claim 7, wherein the holding part (121, 221) can be fixed to the mounting block (3) by clamping.

9. Length measuring device according to one of the preceding claims, wherein the carrier (1) is a hollow profile, in the interior of which the measuring tape (2) is tensioned along the hollow profile.

## Revendications

1. Dispositif de mesure de longueur pour la mesure de la position relative de deux objets avec
- un ruban de mesure (2) avec une graduation de mesure et un support (1) et avec une unité de lecture déplaçable en direction longitudinale (X) par rapport à celui-ci pour la lecture de la graduation;
- un dispositif de tension (100, 200) pour tendre le ruban de mesure (2) le long du support (1), comprenant
• une pièce fixe (110, 210) immobile par rapport au support (1) et un élément de tension (120, 220) maintenu sous tension sur celui-ci au moyen d'un moyen de ressort (126, 226) agissant en direction longitudinale (X), qui présente une zone de retenue à laquelle le ruban de mesure (2) est fixé;
• un moyen de réglage (111, 211) pour le réglage de la tension (F) du ruban de mesure (2),
dans lequel la zone de retenue est une pièce de retenue (121, 221) séparable de l'élément de tension (120, 220), qui est fixée de façon séparable à l'élément de tension (120, 220) et qui est configurée de telle manière qu'elle ne soit pas disposée dans le chemin de déplacement de l'unité de lecture et
dans lequel le moyen de ressort (126, 226) est disposé de telle manière que sa ligne d'action soit en alignement avec le ruban de mesure (2).

2. Dispositif de mesure de longueur selon la revendication 1, dans lequel le dispositif de tension (100, 200) présente un élément intermédiaire (124, 224), qui est réglable en direction longitudinale (X) par rapport à la pièce fixe (110, 210) au moyen du moyen de réglage (111, 211), et dans lequel le moyen de ressort (126, 226) exerce une force de ressort agissant en direction longitudinale (X) sur l'élément de tension (120, 220) à partir de l'élément intermédiaire (124, 224).

3. Dispositif de mesure de longueur selon la revendication 2, dans lequel le moyen de réglage (111, 211) est une vis, qui est configurée et disposée de telle manière que l'élément intermédiaire (124, 224) puisse, par rotation de la vis (111, 211), être déplacé en direction longitudinale (X) par rapport à la pièce fixe (110, 210).

4. Dispositif de mesure de longueur selon l'une quelconque des revendications précédentes, dans lequel la pièce de retenue (121, 221) est fixée de façon séparable à l'élément de tension (120, 220) au moyen d'un moyen de fixation (123, 223) sous la forme d'une vis, qui est configurée et disposée de telle manière que la pièce de retenue (121, 221) puisse, par rotation de la vis (123, 223), se déplacer en direction longitudinale (X) par rapport à l'élément de tension (120, 220).

5. Dispositif de mesure de longueur selon la revendication 3 ou 4, dans lequel la vis formant le moyen de réglage (111, 211) et la vis formant le moyen de fixation (123, 223) s'étendent en direction longitudinale (X) et sont disposées de façon décalée l'une par rapport à l'autre perpendiculairement à la direction longitudinale (X).

6. Dispositif de mesure de longueur selon l'une quelconque des revendications précédentes, dans lequel le moyen de ressort (126, 226) est au moins un ressort hélicoïdal disposé suivant la direction longitudinale (X) sous la forme d'un ressort de traction ou d'un ressort de pression.

7. Dispositif de mesure de longueur selon l'une quelconque des revendications précédentes, dans lequel un bloc de montage (3) est disposé de façon déplaçable en direction longitudinale (X) sur le support (1) et la pièce de retenue (121, 221) avec le ruban de mesure (2) fixé à celle-ci peut être fixé de façon immobile à ce bloc de montage (3).

8. Dispositif de mesure de longueur selon la revendication 7, dans lequel la pièce de retenue (121, 221) peut être immobilisée sur le bloc de montage (3) par des attaches.

9. Dispositif de mesure de longueur selon l'une quelconque des revendications précédentes, dans lequel le support (1) est un profilé creux, dans l'espace intérieur duquel le ruban de mesure (2) est tendu le long du profilé creux.
